# EUROPÄISCHE PATENTSCHRIFT

(11) **EP 1 520 764 B1**
(45) Veröffentlichungstag und Bekanntmachung des Hinweises auf die Patenterteilung: **22.11.2006**
(21) Anmeldenummer: 04023357.9
(22) Anmeldetag: 30.09.2004
(51) Int. Cl.: B60T 15/18

(54) **Steuerventileinrichtung für eine indirekt wirkende Druckluftbremse eines Schienenfahrzeugs**
Control valve device for an indirect acting rail vehicle pneumatic brake
Dispositif de commande de valve d'un frein pneumatique a actionnement indirecte pour véhicule ferroviaire

(30) Priorität: 30.09.2003 DE 10345794
(43) Veröffentlichungstag der Anmeldung: 06.04.2005
(73) Patentinhaber: KNORR-BREMSE Systeme für Schienenfahrzeuge GmbH, 80809 München (DE)
(72) Erfinder: Sonntag, Stefan, 82024 Taufkirchen (DE); Simon, Timm, 80636 München (DE); Heller, Martin, Dr., 85716 Unterschleissheim (DE)

(56) Entgegenhaltungen:
- GB-A- 750 582
- GB-A- 751 070
- GB-A- 2 093 938
- US-A- 3 994 536

## Beschreibung

### Stand der Technik

Die Erfindung geht aus von einer Steuerventileinrichtung für eine indirekt wirkende Druckluftbremse eines Schienenfahrzeugs, welche in Abhängigkeit eines in einer Hauptluftleitung anstehenden Hauptluftleitungsdrucks einen Steuerdruck für ein Relaisventil oder einen Bremsdruck für wenigstens einen Bremszylinder aussteuert, mit einer über ein Angleichventil mit einem Angleichvolumen zusammenwirkenden Steuerkammer, nach der Gattung des Patentanspruchs 1.

Das Dokument US 3 994 536 zeigt eine Steuerventileinrichtung gemäß den Oberbegriff des Anspruchs 1.

Bei indirekt wirkenden Druckluftbremsen wird eine Bremsung ausgehend von einem Regelbetriebsdruck von ca. 5 • 10⁵ Pa durch Druckabfall in der Hauptluftleitung und das Lösen durch eine Steigerung des so erhaltenen Drucks erzielt. Dabei dient eine gattungsgemäße Steuerventileinrichtung zur Bildung des Bremsdrucks im Bremszylinder bzw. eines Vorsteuerdrucks für ein Relaisventil in Abhängigkeit vom Druck in der Hauptluftleitung des Zuges bzw. Fahrzeuges. Da die Hauptluftleitung sich über den ganzen Fahrzeugverband eines Zuges erstreckt, kann es zu Druckschwankungen innerhalb gewisser Grenzen kommen, welche allerdings nicht gleich dazu führen dürfen, daß eine Bremsung eingeleitet oder die Bremse ungewollt gelöst wird. Der UIC-Kodex 540 gibt folglich eine Unempfindlichkeit der Druckluftbremse bei einer langsamen Drucksenkung in der Hauptluftleitung vor, wobei bei einer Reduzierung ausgehend vom Regelbetriebsdruck um 0,3 • 10⁵ Pa je Minute keine Bremsung eingeleitet werden darf. Andererseits muß die Empfindlichkeit der Druckluftbremse bei Drucksenkungen in der Hauptluftleitung so sein, daß eine Bremsung innerhalb von 1,2 Sekunden bei einer Drucksenkung ausgehend vom Regelbetriebsdruck von 0,6 • 10⁵ Pa in 6 Sekunden eingeleitet wird.

Die Steuerventileinrichtung füllt bei gelöster Bremse die Steuerkammer mit dem Regelbetriebsdruck aus der Hauptluftleitung. Der so gespeicherte Druck dient beim Anlegen der Bremse als Referenzdruck, um die Absenkung des Druckes in der Hauptluftleitung festzustellen. Für eine korrekte Funktion der Steuerventileinrichtung ist folglich ein konstanter Druck in der Steuerkammer anzustreben bzw. eine Drucküberhöhung zu vermeiden. Bei einer langsamen Absenkung des Druckes in der Hauptluftleitung mit einem durch den UIC-Kodex 540 definierten Gradienten der Unempfindlichkeit ist eine Steuerventileinrichtung auch ohne Angleichventil in der Lage, den Druck in der Steuerkammer zu vermindern, so daß es nicht zum ungewollten Einbremsen kommt.

Bei einem nach einer Bremsung stattfindenden Füllstoß zum Lösen der Bremse kann der Druck in der Hauptluftleitung jedoch schlagartig über den Regelbetriebsdruck von ca. 5 bar ansteigen. In der Folge steigt auch der Druck in der Steuerkammer an. Bei Fahrzeugen, bei denen die Führerbremsventile nicht dazu eingerichtet sind, einen Unempfindlichkeitsgradienten gemäß des UIC-Kodex 540 zu erzeugen oder diese Einrichtung aus betrieblichen Gründen nicht genutzt wird, gibt es keine Möglichkeit, bei Überladung der Steuerkammer die Bremse zu lösen ohne an jedem einzelnen Steuerventileinrichtung des Zuges eine Bedienhandlung vorzunehmen.

Um Druckschwankungen in der Steuerkammer der Steuerventileinrichtung zu vermeiden, wird beim Stand der Technik ein Angleichventil und ein Angleichvolumen vorgesehen. Bei Überladung der Steuerkammer wird Druckluft in das Angleichvolumen abgeleitet. Dabei wird der Druck im Angleichvolumen durch einen pneumatischen, durch den Hauptluftleitungsdruck geführten Regler des Angleichventils eingeregelt. Der Druck im Angleichvolumen stellt sich dann gleich zum Hauptluftleitungsdruck oder in einer festen Differenz zu diesem ein. Aufgrund der Regelung sind solche Angleichventile jedoch aufwendig in der Herstellung. Weiterhin ist bei dieser Anordnung ein großes, vom Volumen der Steuerkammer abhängiges Angleichvolumen notwendig, um Druckschwankungen in der Steuerkammer schnell ausgleichen zu können.

Der Erfindung liegt die Aufgabe zugrunde, eine Steuerventileinrichtung der eingangs erwähnten Art derart weiter zu bilden, daß sie kostengünstiger zu fertigen ist und einen kleineren Bauraum einnimmt.

Erfindungsgemäß wird diese Aufgabe dadurch gelöst, daß
a) das Angleichventil in einer ersten Schaltstellung eine Strömungsverbindung zwischen dem Angleichvolumen und der Steuerkammer und in einer zweiten Schaltstellung eine Strömungsverbindung zwischen dem Angleichvolumen und einer Entlüftung herstellt,
b) das Angleichventil durch einen Kolben betätigbar ist, der in die erste Schaltstellung durch den Hauptluftleitungsdruck und durch eine Federeinrichtung und in die zweite Schaltstellung durch den Druck in der Steuerkammer belastet ist.

### Vorteile der Erfindung

Der Erfindung liegt der Gedanke zugrunde, das Angleichventil so auszubilden und so zwischen Hauptluftleitung, Steuerkammer und Angleichvolumen anzuordnen und zu schalten, daß das Angleichvolumen wechselweise entlüftet und mit der Steuerkammer verbindbar ist. Das Angleichventil wird dann pneumatisch durch den Druck in der Steuerkammer und durch den Druck in der Hauptluftleitung gesteuert. Somit kann der Lokführer durch Beeinflussung des Druckes in der Hauptluftleitung den Druck in der Steuerkammer reduzieren, ohne daß eine direkte Verbindung der Steuerkammer mit der Entlüftung geschaffen wird, was aus Sicherheitsgründen nicht erwünscht ist. Ein Angleichventil mit diesen Eigenschaften ist einfach aufgebaut, beansprucht wenig Bauraum und ist kostengünstig zu realisieren. Da das Angleichvolumen über die Entlüftung vollständig entlüftbar ist, kann es kleiner als beim Stand der Technik ausfallen.

Durch die in den Unteransprüchen aufgeführten Maßnahmen sind vorteilhafte Weiterbildungen und Verbesserungen der im Patentanspruch 1 angegebenen Erfindung möglich.

Besonders bevorzugt ist die Federeinrichtung einerseits am Kolben und andererseits an einem Zwischenboden eines Angleichventilgehäuses abgestützt, wobei eine Kolbenstange des Kolbens eine Durchgangsöffnung des Zwischenbodens dichtend durchragt.
Gemäß einer ersten Ausführungsform beinhaltet das Angleichventil ein Doppelsitzventil, wobei die Kolbenstange eine axiale Durchgangsbohrung aufweist, welche einerseits in einem Ventilsitz zur Anlage an einem Ventilteller des Doppelsitzventils und andererseits in einer Öffnung endet, welche in eine unter dem Druck der Steuerkammer stehende Kammer mündet. Der Ventilteller ist gegen einen weiteren Ventilsitz des Doppelsitzventils federbelastet, wobei der Ventilteller eine mit dem Angleichvolumen in Verbindung stehende Kammer von der Entlüftung trennt.

Gemäß einer weiteren Ausführungsform ist das Angleichvolumen in dem Angleichventilgehäuse integriert. Hierbei kann der Kolben mit seinen voneinander weg weisenden Enden der Kolbenstange jeweils einen gegen einen Ventilsitz federbelasteten Ventilteller betätigen, wobei der eine Ventilteller das Angleichvolumen von der Entlüftung und der andere Ventilteller das Angleichvolumen von einer unter dem Druck in der Steuerkammer stehenden Kammer trennt.

Bei beiden Ausführungsformen ist gegenüber der Regelung des Stands der Technik ein wesentlich einfacherer und kostengünstigerer Aufbau des Angleichventils gegeben.

### Zeichnungen

Ausführungsbeispiele der Erfmdung sind in der Zeichnung dargestellt und in der nachfolgenden Beschreibung näher erläutert. In der Zeichnung zeigt :
- Fig.1: eine schematische Darstellung einer Steuerventileinrichtung für eine indirekt wirkende Druckluftbremse eines Schienenfahrzeugs gemäß der Erfindung mit einem Angleichventil in einer ersten Ausführungsform;
- Fig.2: eine Schnittdarstellung eines Angleichventils gemäß einer weiteren Ausführungsform.

### Beschreibung der Ausführungsbeispiele

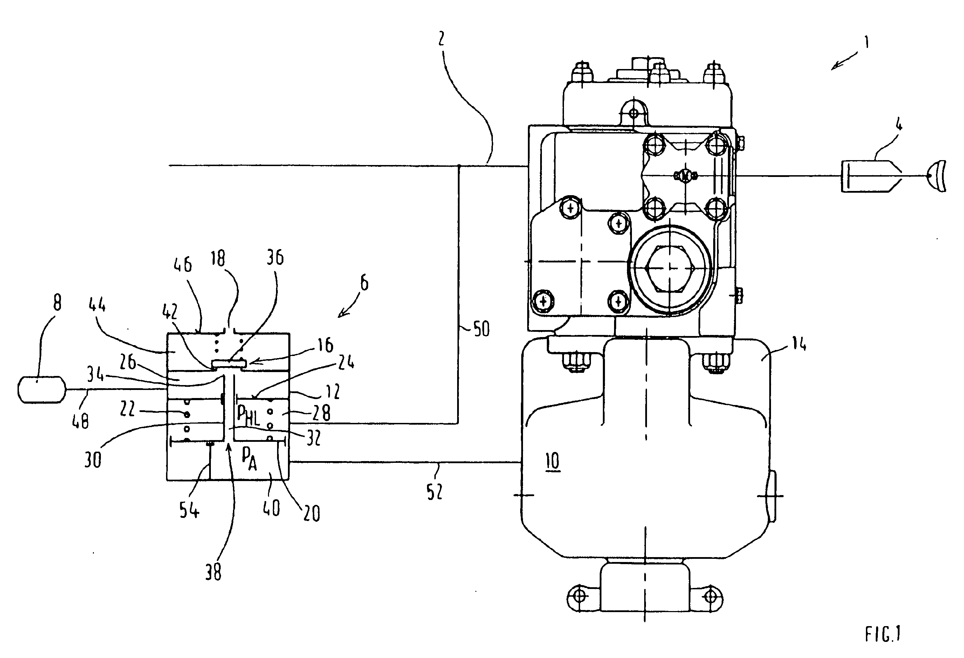

In Fig. 1 ist in stark schematisierter Weise eine Steuerventileinrichtung 1 für eine indirekt wirkende Druckluftbremse eines Schienenfahrzeugs dargestellt, welche in Abhängigkeit eines in einer Hauptluftleitung 2 anstehenden Hauptluftleitungsdrucks p_{HL} einen Bremsdruck für wenigstens einen Bremszylinder 4 aussteuert. Alternativ könnte die Steuerventileinrichtung 1 auch einen Steuerdruck für ein nachgeordnetes Relaisventil erzeugen. Der Hauptluftleitungsdruck p_{HL} wird in Abhängigkeit einer über ein aus Maßstabsgründen nicht gezeigtes Führerbremsventil eingegebenen Bremsanforderung des Fahrers verändert.

Die Steuerventileinrichtung 1 beinhaltet eine über ein Angleichventil 6 mit einem Angleichvolumen 8 zusammenwirkende Steuerkammer, welche in der Figur durch die Bezugszahl 10 angedeutet ist. Die Steuerventileinrichtung 1 füllt bei gelöster Bremse die Steuerkammer 10 mit dem Regelbetriebsdruck p = 5 •10⁵ Pa aus der Hauptluftleitung 2. Der so gespeicherte Druck dient beim Anlegen der Druckluftbremse als Referenzdruck, um die Absenkung des Druckes p_{HL} in der Hauptluftleitung 2 festzustellen. Die grundlegende Funktion einer solchen Steuerventileinrichtung 1 ist bekannt. Deshalb soll hier nicht weiter darauf eingegangen werden.

Im Unterschied zum Stand der Technik beinhaltet die Steuerventileinrichtung 1 ein besonders ausgestaltetes Angleichventil 6. Die Bauteile des Angleichventils 6 können in einem eigenen Angleichventilgehäuse 12 untergebracht sein. Möglich ist aber auch, sie direkt in das Gehäuse 14 der Steuerventileinrichtung 1 zu integrieren.

Das Angleichventil 6 gemäß einer ersten Ausführungsform weist ein Doppelsitzventil 16 auf, das in einer ersten Schaltstellung eine Strömungsverbindung zwischen dem Angleichvolumen 8 und der Steuerkammer 10 und in einer zweiten Schaltstellung eine Strömungsverbindung zwischen dem Angleichvolumen 8 und einer Entlüftung 18 herstellt.

Weiterhin ist das Doppelsitzventil 16 durch einen Kolben 20 betätigbar, der in die erste Schaltstellung durch den Hauptluftleitungsdruck p_{HL} und durch eine beispielsweise durch eine Schraubenfeder 22 gebildete Federeinrichtung und in die zweite Schaltstellung durch den Druck p_{A} in der Steuerkammer 10 belastet ist. Hierzu ist der Kolben 20 in dem Angleichventilgehäuse 12 verschieblich geführt und hat vorzugsweise zwei gleich große Wirkflächen an den beiden Kolbenseiten.

Die Schraubenfeder ist einerseits am Kolben 20 und andererseits an einem Zwischenboden 24 des Angleichventilgehäuses 12 abgestützt, wobei der Zwischenboden 24 eine mit dem Angleichvolumen 8 in Verbindung stehende erste Kammer 26 von einer unter Hauptluftleitungsdruck p_{HL} stehenden zweiten Kammer 28 trennt. Weiterhin durchragt eine Kolbenstange 30 des Kolbens 20 eine Durchgangsöffnung des Zwischenbodens 24 dichtend. Hierbei weist die Kolbenstange 30 eine axiale Durchgangsbohrung 32 auf, deren eines Ende als Ventilsitz 34 zur Anlage an einem Ventilteller 36 des Doppelsitzventils 16 und deren anderes Ende als Öffnung 38 vorzugsweise direkt am Kolben 20 ausgebildet ist, welche in eine unter dem Druck p_{A} der Steuerkammer stehende dritte Kammer 40 mündet. Der Kolben 20 trennt dann die zweite Kammer 28 von der dritten Kammer 40. Der Ventilteller 36 ist gegen einen weiteren Ventilsitz 42 des Doppelsitzventils 16 federbelastet, welcher die mit dem Angleichvolumen 8 in Verbindung stehende erste Kammer 26 von einer Entlüftungskammer 44 trennt, die mit der Entlüftung 18 in Verbindung steht, die beispielsweise in einem Deckel 46 des Angleichventilgehäuses 12 ausgebildet ist.

Eine vom Angleichvolumen 8 herangeführte pneumatische Leitung 48 steht mit der ersten Kammer 26 in Verbindung. Weiterhin sind über entsprechende pneumatische Leitungen 50 und 52 die zweite Kammer 28 an die Hauptluftleitung 2 und die dritte Kammer 40 an die Steuerkammer 10 angeschlossen. Das Angleichvolumen kann, wie gezeigt, durch einen vom Angleichventil 6 getrennten, separaten Druckluftbehälter 8 realisiert sein.

Vor diesem Hintergrund ist die Funktionsweise der erfindungsgemäßen Steuerventileinrichtung 1 und insbesondere des neuen Angleichventils 6 wie folgt : Bei gelöster Bremse, d.h. bei unter Regelbetriebsdruck stehender Hauptluftleitung 2 steht dieser Druck in der zweiten Kammer 28 und in der dritten Kammer 40 an. Da dann beide Wirkflächen des Kolbens 20 durch gleiche, einander entgegen wirkende Druckkräfte belastet sind, sorgt die Schraubenfeder 22 dafiir, daß der Kolben 20 gegen einen unteren Anschlag 54 anschlägt und dabei das obere, als Ventilsitz 34 ausgebildete Ende der Kolbenstange 30 vom Ventilteller 36 abgehoben ist, um mittels der Durchgangsbohrung 32 in der Kolbenstange 30 eine Strömungsverbindung zwischen der ersten Kammer 26 und der dritten Kammer 40 herzustellen, welche wiederum mit der Steuerkammer 10 verbunden ist, so daß der Druck im Angleichvolumen 8 dem Druck p_{A} in der Steuerkammer 10 entspricht und in etwa gleich dem Regelbetriebsdruck ist. Diese Situation ist in der Figur dargestellt.

Wenn nun ausgehend von der Lösestellung der Druckluftbremse durch das Führerbremsventil ein pneumatisches Bremsanforderungssignal in Form eines abgesenkten Hauptluftleitungsdrucks p_{HL} an die Steuerventileinrichtung 1 herangeführt und genauer über die Hauptluftleitung 2 und die pneumatische Leitung 50 in die zweite Kammer 28 eingesteuert wird, so sorgt der demgegenüber größere, nach wie vor dem Regelbetriebsbremsdruck entsprechende und sowohl in der Steuerkammer 10 als auch in der dritten Kammer 40 anstehende Druck p_{A} dafür, daß sich der Kolben 20 gegen die Kraft der Schraubenfeder 22 nach oben bewegt und das als Ventilsitz 34 ausgebildete obere Ende der Kolbenstange 30 am Ventilteller 36 zur Anlage kommt. Hierdurch wird die Strömungsverbindung zwischen dem Angleichvolumen 8 und der Steuerkammer 10 unterbrochen. Bei einer weiteren Bewegung des Kolbens 20 nach oben wird der Ventilteller 36 von dem weiteren Ventilsitz 42 unter Freigabe eines Strömungsquerschnitts abgehoben, welcher eine Verbindung zwischen dem Angleichvolumen 8 und der Entlüftung 18 schafft, wodurch das Angleichvolumen 8 schlagartig entlüftet wird. In der Folge ist der Druck im Angleichvolumen 8 auf den Umgebungsdruck abgesenkt, wenn nach dem Zuspannen der Druckluftbremse der Lösevorgang durch einen Füllstoß eingeleitet und das Angleichvolumen 8 erneut mit der Steuerkammer 10 verbunden wird. Dann kann Druckluft aufgrund des Druckgefälles von der Steuerkammer 10 in das Angleichvolumen 8 strömen, um einen zu hohen Druck in der Steuerkammer 10 zu vermeiden.

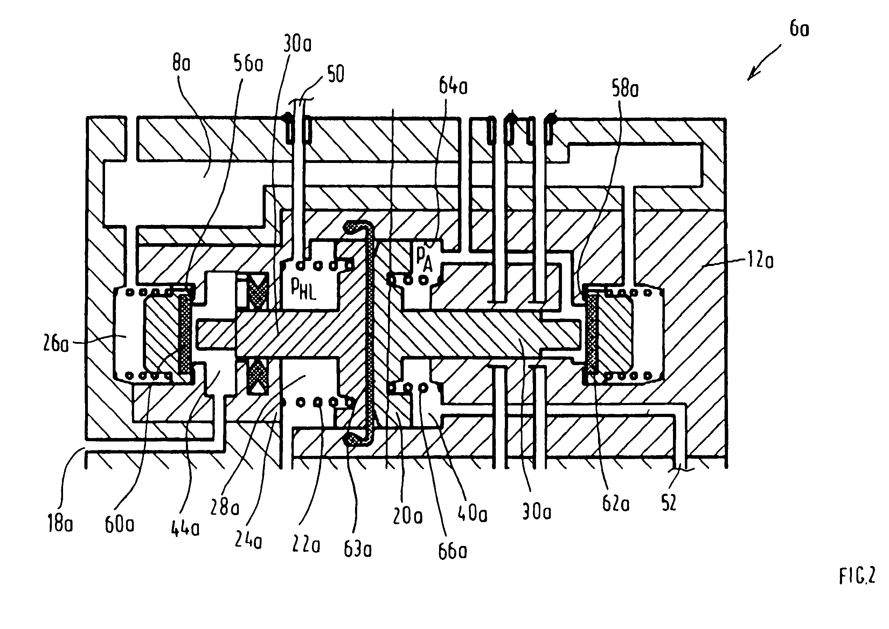

Bei dem zweiten Ausführungsbeispiel eines Angleichventils nach Fig.2 sind die gegenüber dem vorhergehenden Beispiel gleichbleibendem und gleichwirkenden Teile durch die gleichen Bezugszahlen, ergänzt durch den Buchstaben "a" gekennzeichnet. Im Unterschied zu diesem ist das Angleichvolumen 8a in dem Angleichventilgehäuse 12a integriert. Der in einer Bohrung 64a des Angleichventilgehäuses 12a geführte Kolben 20a betätigt mit seinen voneinander weg weisenden Enden der Kolbenstange 30a jeweils einen gegen einen Ventilsitz 56a, 58a federbelasteten Ventilteller 60a, 62a , wobei der eine Ventilteller 60a das Angleichvolumen 8a von der Entlüftung 18a und der andere Ventilteller 62a das Angleichvolumen 8a von einer unter dem Druck p_{A} in der Steuerkammer 10 stehenden Kammer 40a trennt. Diese Kammer 40a steht über die pneumatische Leitung 52 mit der Steuerkammer 10 in Verbindung, wie es in Fig.1 gezeigt ist.

Die Schraubenfeder 22a ist einerseits am Kolben 20a und andererseits an einem Zwischenboden 24a des Angleichventilgehäuses 12a abgestützt, wobei der Zwischenboden 24a die mit der Entlüftung 18a in Verbindung stehende Kammer 44a von der durch die pneumatische Leitung 50 unter Hauptluftleitungsdruck p_{HL} stehenden Kammer 28a trennt. Weiterhin durchragt die Kolbenstange 30a des Kolbens 20a eine Durchgangsöffnung des Zwischenbodens 24a dichtend.

Um die unter Hauptluftleitungsdruck p_{HL} stehende, diesseits des Kolbens 20a gelegene Kammer 28a gegenüber der jenseits des Kolbens gelegenen Kammer 40a abzudichten, ist der Kolben 20a zweiteilig, wobei zwischen den Kolbenhälften eine Membran 63a gehalten ist, deren radial äußerer Umfangsrand in der Wandung der Bohrung 64a aufgenommen ist. Weiterhin ist der Kolben 20a durch die Schraubenfeder 22a in Richtung des Ventiltellers 62a und durch eine weitere Schraubenfeder 66a in Richtung des Ventiltellers 60a vorgespannt.

Vor diesem Hintergrund ist die Funktionsweise des Angleichventils 6a wie folgt : Bei gelöster Bremse, d.h. bei unter Regelbetriebsdruck stehender Hauptluftleitung 2 steht dieser Druck über die pneumatische Leitung 50 in der Kammer 28a und über die Steuerkammer 10 auch in der Kammer 40a an. Da dann beide Wirkflächen des Kolbens 20a durch gleiche, einander entgegen wirkende Druckkräfte belastet sind, sorgt die gegenüber der einen Schraubenfeder 66a eine größere Federkraft auf den Kolben 20a ausübende Schraubenfeder 22a dafür, daß der Kolben 20a mit seinem einen Ende der Kolbenstange 30a den Ventilteller 62a vom Ventilsitz 58a abhebt, um eine Strömungsverbindung zwischen dem Angleichvolumen 8a und der Kammer 40a herzustellen, welche wiederum mit der Steuerkammer 10 verbunden ist, so daß der Druck im Angleichvolumen 8 dem Druck p_{A} in der Steuerkammer 10 entspricht und in etwa gleich dem Regelbetriebsdruck ist.

Wenn nun ausgehend von der Lösestellung der Druckluftbremse durch das Führerbremsventil ein pneumatisches Bremsanforderungssignal in Form eines abgesenkten Hauptluftleitungsdrucks p_{HL} an die Steuerventileinrichtung 1 herangeführt und genauer über die Hauptluftleitung 2 und die pneumatische Leitung 50 in die Kammer 28a eingesteuert wird, so sorgt der demgegenüber größere, nach wie vor dem Regelbetriebsbremsdruck entsprechende und sowohl in der Steuerkammer 10 als auch in der Kammer 40a anstehende Druck p_{A} dafür, daß das andere Ende der Kolbenstange 30 des Kolben 20a mit der Kraft der Schraubenfeder 66a und gegen die Kraft der Schraubenfeder 22a am Ventilteller 60a zur Anlage kommt. Dann wird die Strömungsverbindung zwischen dem Angleichvolumen 8 und der Steuerkammer 10 unterbrochen, da der Ventilteller 62a wieder am Ventilsitz 58a dichtend zur Anlage kommt.

Bei einer weiteren Bewegung des Kolbens 20a in Richtung Ventilteller 60a wird dieser von dem Ventilsitz 56a unter Freigabe eines Strömungsquerschnitts abgehoben, welcher eine Verbindung zwischen dem Angleichvolumen 8a und der Entlüftung 18a schafft, wodurch das Angleichvolumen 8a schlagartig entlüftet wird. In der Folge ist der Druck im Angleichvolumen 8a auf den Umgebungsdruck abgesenkt, wenn nach dem Zuspannen der Druckluftbremse der Lösevorgang durch einen Füllstoß eingeleitet und das Angleichvolumen 8a erneut mit der Steuerkammer 10 verbunden wird. Dann kann Druckluft aufgrund des Druckgefälles von der Steuerkammer 10 in das Angleichvolumen 8a strömen, um einen zu hohen Druck in der Steuerkammer 10 zu vermeiden.

### Bezugszahlenliste

- 1: Steuerventileinrichtung
- 2: Hauptluftleitung
- 4: Bremszylinder
- 6, 6a: Angleichventil
- 8, 8a: Angleichvolumen
- 10: Steuerkammer
- 12, 12a: Angleichventilgehäuse
- 14: Gehäuse
- 16: Doppelsitzventil
- 18, 18a: Entlüftung
- 20, 20a: Kolben
- 22, 22a: Schraubenfeder
- 24, 24a: Zwischenboden
- 26, 26A: Kammer
- 28, 28a: zweite Kammer
- 30, 30a: Kolbenstange
- 32: Durchgangsbohrung
- 34: Ventilsitz
- 36: Ventilteller
- 38: Öffnung
- 40, 40a: Kammer
- 42: Ventilsitz
- 44: Entlüftungskammer
- 46: Deckel
- 48: pneumatische Leitung
- 50: pneumatische Leitung
- 52: pneumatische Leitung
- 54: Anschlag
- 56a: Ventilsitz
- 58a: Ventilsitz
- 60a: Ventilteller
- 62a: Ventilteller
- 63a: Membran
- 64a: Bohrung
- 66a: Schraubenfeder

## Patentansprüche

1. Steuerventileinrichtung (1) für eine indirekt wirkende Druckluftbremse eines Schienenfahrzeugs, welche in Abhängigkeit eines in einer Hauptluftleitung (2) anstehenden Hauptluftleitungsdrucks (p_{HL}) einen Steuerdruck für ein Relaisventil oder einen Bremsdruck für wenigstens einen Bremszylinder (4) aussteuert, mit einer über ein Angleichventil (6; 6a) mit einem Angleichvolumen (8; 8a) zusammenwirkende Steuerkammer (10), **dadurch gekennzeichnet, daß**
c) das Angleichventil (6; 6a) in einer ersten Schaltstellung eine Strömungsverbindung zwischen dem Angleichvolumen (8; 8a) und der Steuerkammer (10) und in einer zweiten Schaltstellung eine Strömungsverbindung zwischen dem Angleichvolumen (8; 8a) und einer Entlüftung (18; 18a) herstellt,
d) das Angleichventil (6; 6a) durch einen Kolben (20; 20a) betätigbar ist, der in die erste Schaltstellung durch den Hauptluftleitungsdruck (p_{HL}) und durch eine Federeinrichtung (22; 22a) und in die zweite Schaltstellung durch den Druck (p_{A}) in der Steuerkammer (10) belastet ist.

2. Steuerventileinrichtung nach Anspruch 1, **dadurch gekennzeichnet, daß** die Federeinrichtung (22; 22a) einerseits am Kolben (20; 20a) und andererseits an einem Zwischenboden (24; 24a) eines Angleichventilgehäuses (12; 12a) abgestützt ist.

3. Steuerventileinrichtung nach Anspruch 2, **dadurch gekennzeichnet, daß** eine Kolbenstange (30; 30a) des Kolbens (20; 20a) eine Durchgangsöffnung des Zwischenbodens (24; 24a) dichtend durchragt.

4. Steuerventileinrichtung nach Anspruch 3, **dadurch gekennzeichnet, daß** das Angleichventil (6) ein Doppelsitzventil (16) beinhaltet.

5. Steuerventileinrichtung nach Anspruch 4, **dadurch gekennzeichnet, daß** der Zwischenboden (24) eine mit dem Angleichvolumen (8) in Verbindung stehende Kammer (26) von einer unter Hauptluftleitungsdruck (p_{HL}) stehenden Kammer (28) trennt.

6. Steuerventileinrichtung nach Anspruch 5, **dadurch gekennzeichnet, daß** die Kolbenstange (30) eine axiale Durchgangsbohrung (32) aufweist, welche einerseits in einem Ventilsitz (34) zur Anlage an einem Ventilteller (36) des Doppelsitzventils (16) und andererseits in einer Öffnung (38) endet, welche in eine unter dem Druck (p_{A}) der Steuerkammer (10) stehende Kammer (40) mündet.

7. Steuerventileinrichtung nach Anspruch 6, **dadurch gekennzeichnet, daß** der Ventilteller (36) gegen einen weiteren Ventilsitz (42) des Doppelsitzventils (16) federbelastet ist, wobei der Ventilteller (36) die mit dem Angleichvolumen (8) in Verbindung stehende Kammer (26) von der Entlüftung (18) trennt.

8. Steuerventileinrichtung nach wenigstens einem der Ansprüche 1 bis 3, **dadurch gekennzeichnet, daß** das Angleichvolumen (8a) in dem Angleichventilgehäuse (12a) integriert ist.

9. Steuerventileinrichtung nach Anspruch 8, **dadurch gekennzeichnet, daß** der Kolben (20a) mit seinen voneinander weg weisenden Enden der Kolbenstange (30a) jeweils einen gegen einen Ventilsitz (56a, 58a) federbelasteten Ventilteller (60a, 62a) betätigt.

10. Steuerventileinrichtung nach Anspruch 9, **dadurch gekennzeichnet, daß** der eine Ventilteller (60a) das Angleichvolumen (8a) von der Entlüftung (18a) trennt.

11. Steuerventileinrichtung nach Anspruch 10, **dadurch gekennzeichnet, daß** der andere Ventilteller (62a) das Angleichvolumen (8a) von einer unter dem Druck (p_{A}) in der Steuerkammer (10) stehenden Kammer (40a) trennt.

## Claims

1. Control valve device (1) for an indirectly acting pneumatic brake of a rail vehicle, which, in response to a pressure in the main brake pipe (p_{HL}) prevailing in a main brake pipe (2), controls a control pressure for a relaying valve or adjusts a braking pressure for at least one brake cylinder (4), comprising a control chamber (10) cooperating with an interfacing volume (8; 8a) via an interfacing valve (6; 6a), **characterised in that**
(c) said interfacing valve (6; 6a) establishes a flow communication between said interfacing volume (8; 8a) and said control chamber (10) in a first switching position, and a flow communication between said interfacing volume (8; 8a) and a venting means (18; 18a) in a second switching position;
(d) said interfacing valve (6; 6a) is operable by means of a piston (20; 20a) that is loaded by said pressure in the main brake pipe (p_{HL}) and by means of a spring means (22; 22a) into said first switching position and by the pressure (p_{A}) prevailing in said control chamber (10) into said second switching position.

2. Control valve device according to Claim 1, **characterised in that** said spring means (22; 22a) is supported, on the one hand, on said piston (20; 20a) and, on the other hand, on an intermediate bottom (24; 24a) of an interfacing valve housing (12; 12a).

3. Control valve device according to Claim 2, **characterised in that** a piston rod (30; 30a) of said piston (20; 20a) extends through a passage opening of said intermediate bottom (6) with sealing effect.

4. Control valve device according to Claim 3, **characterised in that** said interfacing valve (6) includes a double-seat valve (16).

5. Control valve device according to Claim 4, **characterised in that** said intermediate bottom (24) separates a chamber (26) communicating with said interfacing volume (8) from a chamber (28) controlled by the pressure (p_{HL}) in said main brake pipe.

6. Control valve device according to Claim 5, **characterised in that** said piston rod (30) comprises an axial through-hole (32) that terminates, on the one hand, in a valve seat (34) for bearing against a valve disc (36) of said double-seat valve (16) and, on the other hand, in an opening (38) that passes into a chamber (40) biased by the pressure (p_{A}) of said control chamber (10).

7. Control valve device according to Claim 6, **characterised in that** said valve disc (36) is spring-loaded to bear against a further valve seat (42) of said double-seat valve (16), with said valve disc (36) separating said chamber (26) communicating with said interfacing volume (8) from said venting means (18).

8. Control valve device according to at least one of the Claims 1 to 3, **characterised in that** said interfacing volume (8a) is integrated in said interfacing valve housing (12a).

9. Control valve device according to Claim 8, **characterised in that** said piston (20a) operates a respective valve disc (60a, 62a) spring-loaded against a valve seat (56a, 58a) by its piston rod ends (30a) oriented apart from each other.

10. Control valve device according to Claim 9, **characterised in that** said one valve disc (60a) separates said interfacing volume (8a) from said venting means (18a).

11. Control valve device according to Claim 10, **characterised in that** the other valve disc (62a) separates said interfacing volume (8a) from a chamber (40a) pressurised with the pressure (p_{A}) in said control chamber (10).

## Revendications

1. Dispositif à vanne-pilote (1) d'un frein pneumatique à action indirecte d'un véhicule ferroviaire, qui, en réponse à une pression dans la conduite générale de frein (p_{HL}), qui règne dans une conduite générale de frein (2), règle une pression pilote pour une vanne de relais ou règle une pression de freinage pour au moins un cylindre de frein (4), comprenant une chambre de commande (10) coopérant avec un volume d'alignement (8; 8a) via une vanne d'alignement (6; 6a), **caractérisé en ce que**
(c) ladite vanne d'alignement (6; 6a) établit une communication d'écoulement entre ledit volume d'alignement (8; 8a) et ladite chambre de commande (10) en une première position de manoeuvre et une communication d'écoulement entre ledit volume d'alignement (8; 8a) et un moyen d'aération (18; 18a) en une deuxième position de manoeuvre ;
(d) ladite vanne d'alignement (6; 6a) est commandable moyennant un piston (20; 20a), qui est mis en contrainte par ladite pression dans la conduite générale de frein (p_{HL}) et moyennant un moyen à ressort (22; 22a) vers ladite première position de manoeuvre et par la pression (p_{A}) régnant dans ladite chambre de commande (10) vers ladite deuxième position de manoeuvre.

2. Dispositif à vanne-pilote selon la revendication 1, **caractérisé en ce que** ledit moyen à ressort (22; 22a) est appuyé, d'un côté, audit piston (20; 20a) et, d'autre côté, à une cloison intermédiaire (24; 24a) d'un carter de vanne (12; 12a).

3. Dispositif à vanne-pilote selon la revendication 2, **caractérisé en ce qu'**une tige de piston (30; 30a) dudit piston (20; 20a) s'étend à travers une ouverture traversante de ladite cloison intermédiaire (6) à effet d'étanchéité.

4. Dispositif à vanne-pilote selon la revendication 3, **caractérisé en ce que** ladite vanne d'alignement (6) comprend une soupape à double siège (16).

5. Dispositif à vanne-pilote selon la revendication 4, **caractérisé en ce que** ladite cloison intermédiaire (24) sépare une chambre (26) en communication avec ledit volume d'alignement (8) d'une chambre (28) commandée par la pression (p_{HL}) dans ladite conduite générale de frein.

6. Dispositif à vanne-pilote selon la revendication 5, **caractérisé en ce que** ladite tige de piston (30) comprend trou de passage axial (32), qui se termine, d'un côté, par une siège de soupape (34) afin de porter contre une tête de soupape (36) de ladite soupape à double siège (16) et, d'autre côté, par une ouverture (38), qui passe dans une chambre (40) mise en contrainte par la pression (p_{A}) de ladite chambre de commande (10).

7. Dispositif à vanne-pilote selon la revendication 6, **caractérisé en ce que** ladite tête de soupape (36) est commandée par ressort afin de porter contre une autre siège de soupape (42) de ladite soupape à double siège (16), à ladite tête de soupape (36) séparant ladite chambre (26) en communication avec ledit volume d'alignement (8) dudit moyen d'aération (18).

8. Dispositif à vanne-pilote selon au moins une desdites revendications 1 à 3, **caractérisé en ce que** ledit volume d'alignement (8a) est intégré dans ledit carter de vanne d'alignement (12a).

9. Dispositif à vanne-pilote selon la revendication 8, **caractérisé en ce que** ledit piston (20a) commande une tête de soupape respective (60a, 62a) commandée par ressort à porter contre une siège de soupape (56a, 58a) par les extrémités de sa tige de piston by (30a), qui se séparent en divergence l'une de l'autre.

10. Dispositif à vanne-pilote selon la revendication 9, **caractérisé en ce que** ladite une tête de soupape (60a) sépare ledit volume d'alignement (8a) dudit moyen d'aération (18a).

11. Dispositif à vanne-pilote selon la revendication 10, **caractérisé en ce que** l'autre tête de soupape (62a) sépare ledit volume d'alignement (8a) d'une chambre (40a) mise en pression par la pression (p_{A}) dans ladite chambre de commande (10).
